# EUROPEAN PATENT APPLICATION

(11) **EP 4 489 025 A1**
(43) Date of publication of application: **08.01.2025**
(21) Application number: 22928936.8
(22) Date of filing: 14.12.2022
(51) Int. Cl.: G21D 1/00, G21C 17/00

(54) **PLANT RELIABILITY EVALUATION SYSTEM, PLANT RELIABILITY EVALUATION METHOD, AND PLANT RELIABILITY EVALUATION PROGRAM**

(30) Priority: 28.02.2022 JP 2022029812
(71) Applicant: HITACHI-GE NUCLEAR ENERGY, LTD., Hitachi-shi Ibaraki 317-0073 (JP)
(72) Inventor: ITOU, Tsuyoshi, Hitachi-shi, Ibaraki 317-0073 (JP); WADA, Yoichi, Tokyo 100-8280 (JP); OKIDO, Shinobu, Hitachi-shi, Ibaraki 317-0073 (JP); OTA, Nobuyuki, Hitachi-shi, Ibaraki 317-0073 (JP); SHIMIZU, Ryosuke, Hitachi-shi, Ibaraki 317-0073 (JP); KONO, Naoyuki, Hitachi-shi, Ibaraki 317-0073 (JP)
(74) Representative: MERH-IP Matias Erny Reichl Hoffmann Patentanwälte PartG mbB
(86) International application number: PCT/JP2022/046095
(87) International publication number: WO 2023/162419

(57) **Abstract**

The present invention improves the reliability of an apparatus through inspection during the time the apparatus is in service. This plant reliability evaluation system (S) includes: a detection unit (511) which detects environmental information about a plant (P) in operation, and a soundness monitoring unit (514) which continuously monitoring the soundness of apparatuses that constitute the plant (P) on the basis of the environmental information during operation and importance information about the apparatuses that constitute the plant (P).

## Description

### BACKGROUND OF THE INVENTION

### 1. Field of the Invention

The present invention relates to a plant reliability evaluation system, a plant reliability evaluation method, and a plant reliability evaluation program.

### 2. Description of the Related Art

There is a demand for maintenance methods based on the reliability of systems and equipment for nuclear facilities such as nuclear power plants, Fukushima decommissioning, and reprocessing facilities.

JP2016-189088A describes an invention of a facility management support system that can be expected to be highly convenient to operate by reviewing the template content.

### SUMMARY OF THE INVENTION

There is a problem in the method used in the United States that a long period of time and large resources are spent on the degradation evaluation of systems and equipment reflecting the results of in-service inspection (ISI).

In the Reactor Oversight Process (ROP) in the United States, which the Nuclear Regulation Authority refers to after an earthquake disaster, it is necessary to constantly monitor the soundness of the entire nuclear power plant. For operation beyond 40 years, it is necessary to constantly monitor the reliability of not only conventional equipment but also large structures such as structural materials and weld lines.

Therefore, an object of the present invention is to improve the Equipment Reliability (ER) of equipment including not only conventional equipment but also large structures such as structural materials and weld lines by simultaneously utilizing in-service inspections and operating parameters of nuclear facilities.

In order to achieve the above-described object, a plant reliability evaluation system according to the present invention includes: a detector that detects environmental information of a plant during operation; and a health monitor that constantly monitors health of equipment constituting the plant based on the environmental information during operation and importance information of the equipment constituting the plant.

A plant reliability evaluation method according to the present invention includes the steps of: detecting, by a detector, environmental information of a plant during operation; and constantly monitoring, by a health monitor, health of equipment constituting the plant based on the environmental information during operation and importance information of the equipment constituting the plant.

A plant reliability evaluation program according to the present invention causes a computer to execute procedures of: detecting environmental information of a plant during operation; and constantly monitoring health of equipment constituting the plant based on the environmental information during operation and importance information of the equipment constituting the plant.

Other means will be described in the detailed description of the embodiments.

According to the present invention, by simultaneously utilizing in-service inspections and operating parameters of nuclear facilities, it is possible to improve the reliability of equipment including not only conventional equipment but also large structures such as structural materials and weld lines.

### BRIEF DESCRIPTION OF THE DRAWINGS

FIG. 1 is a diagram showing equipment reliability and lifecycle management of a nuclear power plant according to the present embodiment;
FIG. 2 is a configuration diagram of a reliability evaluation system for a nuclear power plant;
FIG. 3 is a configuration diagram of a nuclear power plant;
FIG. 4 is a hardware configuration diagram of a server;
FIG. 5 is a hardware configuration diagram of a terminal;
FIG. 6 is a functional block diagram of a reliability evaluation system for a nuclear power plant;
FIG. 7 is a diagram showing reliability and lifecycle management of weld lines of a nuclear power plant;
FIG. 8 is a diagram showing reliability and lifecycle management of piping of a nuclear power plant;
FIG. 9 is a flowchart showing a process of periodic inspection of the comparative example; and
FIG. 10 is a diagram showing equipment reliability and lifecycle management of a nuclear power plant of the comparative example.

### DETAILED DESCRIPTION OF THE EMBODIMENTS

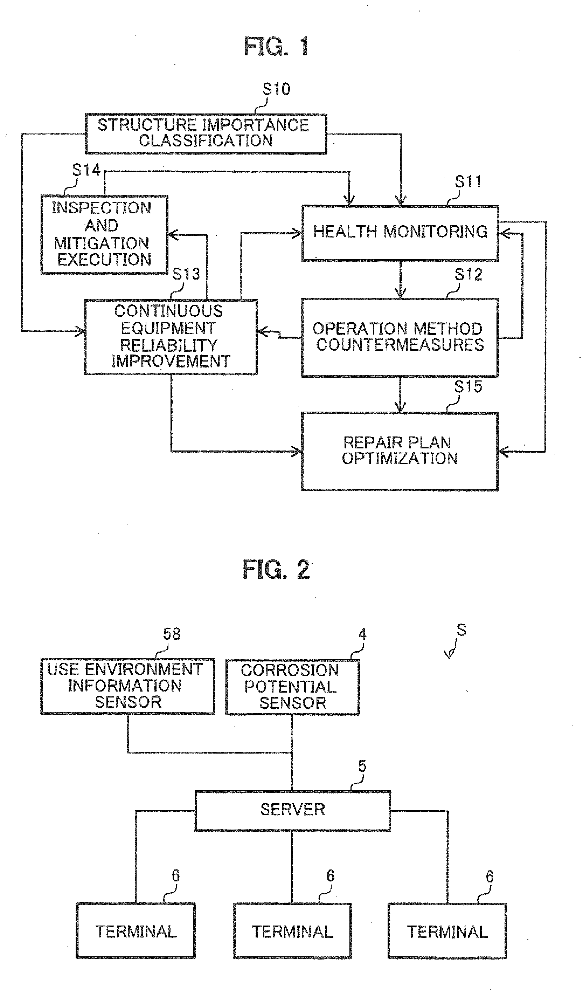

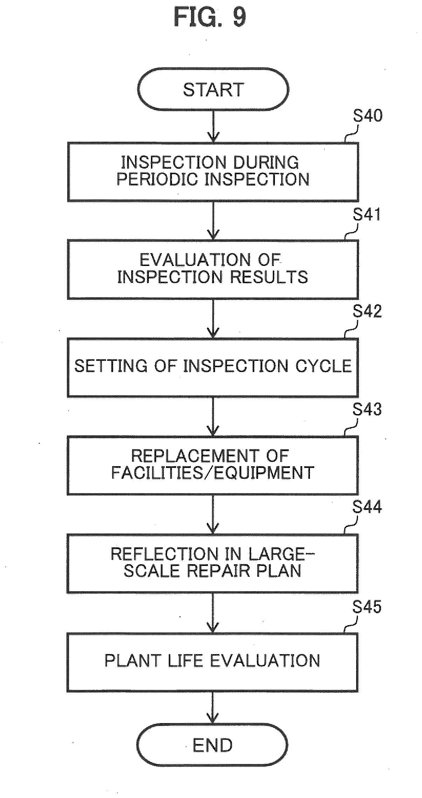

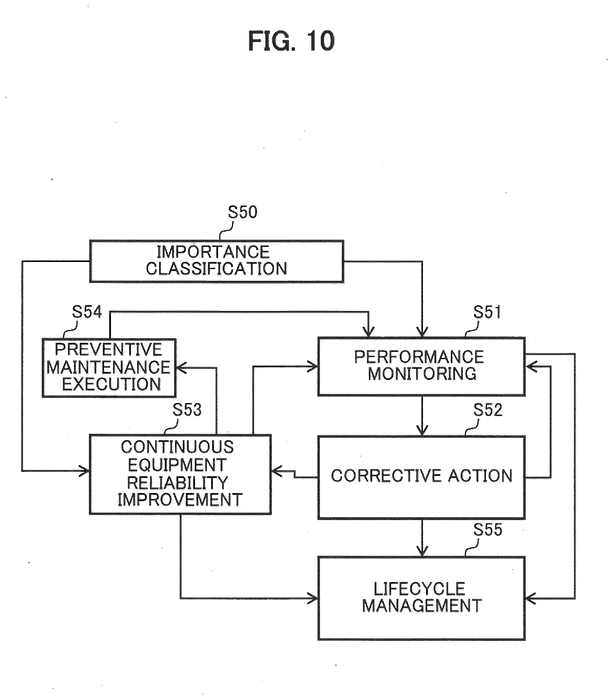

Hereinafter, the embodiment for carrying out the comparative example will be described with reference to FIGS. 9 and 10, and the embodiment for carrying out the present invention will be described with reference to FIGS. 1 to 8. In the following description, the same components will be denoted by the same reference numerals, and redundant description will be omitted as appropriate.

### <<Operation of Comparative Example>>

FIG. 9 is a flowchart showing a process of periodic inspection of the comparative example. This periodic inspection process is performed while the operation of the nuclear plant is halted.

The inspector initiates the inspection during the periodic inspection (step S40). In the comparative example, structural materials, weld lines, etc., related to the soundness of the nuclear reactor are separately inspected and evaluated. The inspector evaluates the inspection results (step S41) and sets an inspection cycle (step S42).

Next, the inspector replaces the facilities/equipment (step S43) and reflects them in a large-scale repair plan (step S44). Finally, the inspector evaluates the plant life (step S45) and terminates the process of FIG. 9.

FIG. 10 is a diagram showing equipment reliability and lifecycle management of a nuclear power plant of the comparative example, based on AP-913 of the Institute of Nuclear Power Operations in the United States. AP-913 is a diagram showing the reliability of equipment and facilities related to the operation of power reactors and a process for managing the lifecycle of the plant.

First, the management system classifies the importance (step S50) and monitors the performance according to this importance (step S51). The manager then makes continuous equipment reliability improvements according to this importance (step S53). The manager performs preventive maintenance on facilities/equipment (step S54). The facilities/equipment that have undergone preventive maintenance are subject to the performance monitoring process (step S51).

The manager takes corrective actions on the facilities/equipment based on the performance monitoring results (step S52). The results of the corrective actions are fed back to the performance monitoring process (step S51) and the continuous equipment reliability improvement process (step S53).

Finally, the manager performs lifecycle management based on the continuous equipment reliability improvement process (step S53), the corrective actions (step S52), and the performance monitoring process (step S51) (step S55).

### <<Operation and Configuration of Present Embodiment>>

In the present embodiment, the soundness evaluation of structural materials and large structures is introduced into the conventional AP913 concept, and the reliability of the entire power plant is visualized.

For operation beyond 40 years, it is possible to constantly monitor the reliability of not only conventional equipment but also large structures such as structural materials and weld lines, and to reflect the results in optimal inspections, equipment replacement, and large-scale repair work, so that the reliability can be ensured and the cost can be optimized.

FIG. 1 is a diagram showing equipment reliability and lifecycle management of a nuclear power plant according to the present embodiment.

The reliability evaluation system S shown in FIG. 2 classifies structures by importance (step S10). The importance of the structure affects the in-reactor safety system, the soundness of the in-reactor fuel, and the release of radioactive materials outside the system; and the importance of the structure is not only determined by law but also influenced by factors such as conventional inspection results and, in operating conditions, the type and concentration of fluids in contact, and chemicals contained in the reactor water of the reactor pressure vessel during operation.

The types of structures classified in step S10 include: in-reactor structures such as reactor pressure vessel, shroud, shroud support, jet pump, and grid plate, and equipment related to control rod insertion; turbine casing, bearings, condenser, generator and hydrogen supply equipment, old condensate system heat exchangers, fuel support plates, and main piping that connects facilities with safety importance and power generation importance higher than a threshold value. Nuclear facilities include fuel fabrication plants, nuclear fuel cycle plants, radioactive waste disposal sites, and the like.

In step S11, the reliability evaluation system S monitors the health of the structure. Health monitoring is the evaluation of the current reliability of a structure from previous inspection results, plant P operating conditions, maintenance specifications, standards, conventional knowledge such as papers, and the like. The reliability evaluation system S may further monitor the health of the structure based on periodic inspection information of the plant P.

Based on the types of structures classified in step S10, the reliability evaluation system S continuously improves equipment reliability (step S13). Specifically, the reliability evaluation system S performs inspection and mitigation (step S14). In the inspection, the reliability evaluation system S selects an inspection frequency and an inspection method that minimize costs while ensuring reliability in consideration of inspection results, maintenance standards, laws, and periodic inspection processes. In mitigation, the reliability evaluation system S instructs the operator's terminal 6 to perform stress mitigation and/or environmental mitigation (step S14). In response to this, the operator performs stress mitigation and/or environmental mitigation on the structure.

The reliability evaluation system S takes countermeasures for operation methods based on the results of monitoring the health of the structure (step S12). Here, countermeasures for operation methods refer to improvement of operation and operation methods of the plant P, enhancement of sampling, operation change of mitigation technology, and the like.

Based on the health monitoring results, the operation method countermeasure results, and the continuous structure reliability improvement results, the reliability evaluation system S optimizes the repair plan (step S15). Here, the optimization of the repair plan is lifecycle management, and requires large-scale construction and inspection.

Therefore, the reliability evaluation system S performs optimization so as to minimize costs while ensuring the reliability of the structure in consideration of the long-term periodic inspection process.

FIG. 2 is a configuration diagram of a reliability evaluation system S for a nuclear power plant P.

The reliability evaluation system S includes a server 5, a use environment information sensor 58, a corrosion potential sensor 4, and a plurality of terminals 6.

The server 5 is a computer that implements the functional units of the reliability evaluation system S. The terminal 6 is an input/output device for accessing the server 5. The use environment information sensor 58 is a sensor that detects the use environment of the equipment constituting the plant P. The corrosion potential sensor 4 is a sensor that detects corrosion environment information of the equipment constituting the plant P.

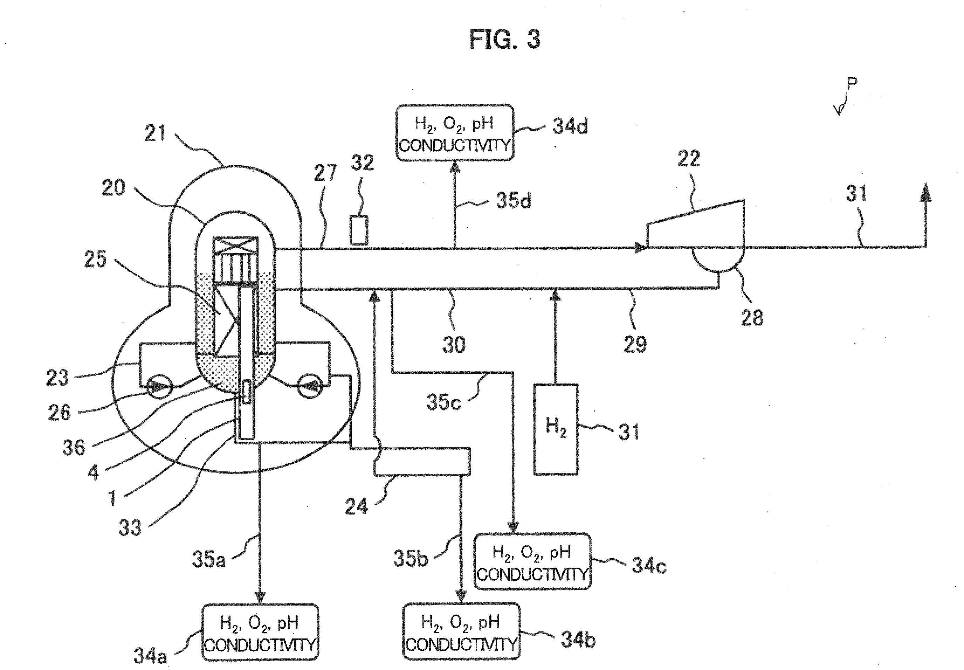

FIG. 3 is a configuration diagram of a nuclear power plant P.

The plant P is a boiling water reactor (BWR) type nuclear power plant, and includes a reactor pressure vessel 20, a reactor containment vessel 21, a turbine 22, recirculation system piping 23, a reactor water cleanup system 24, and a plurality of corrosion potential measuring devices. The reactor pressure vessel 20 installed in the reactor containment vessel 21 has a core 25 loaded with a plurality of fuel assemblies (not shown) inside.

Each of the two recirculation systems has recirculation system piping 23 and a recirculation pump 26. Main steam piping 27 connected to the reactor pressure vessel 20 is connected to the turbine 22. A condenser 28 connected to the turbine 22 is connected to the reactor pressure vessel 20 by feedwater piping 30 after condensate piping 29. Off-gas system piping 31 is connected to the condenser 28. Off-gas system piping 31 is connected to condensate piping 29, and a dose rate monitor 32 is installed near the main steam piping 27.

The reactor water cleanup system 24 has piping connected to the recirculation system piping 23 and drain piping 33 connected to the bottom of the reactor pressure vessel 20, and has a purification device (not shown) in the system. The reactor water cleanup system 24 is connected to the feedwater piping 30.

A water quality measuring device 34a is connected to the drain piping 33 by sampling piping 35a, and a water quality measuring device 34b is connected to the reactor water cleanup system 24 by sampling piping 35b. A water quality measuring device 34c is connected to the feedwater piping 30 by sampling piping 35c, and a water quality measuring device 34d is connected to the main steam piping 27 by sampling piping 35d.

The corrosion potential sensor 4 is installed at a corresponding location of the boiling water reactor plant using a local power range monitor outer tube 1. The corrosion potential sensor 4 is installed at a corresponding location in the lower plenum 36 to measure the quality of water in the lower plenum 36 at the bottom of the reactor pressure vessel 20. In this case, in order to measure the corrosion potential near the pressure vessel bottom mirror 8, the corrosion potential sensor 4 is installed at a height near the pressure vessel bottom mirror, and a corrosion potential measuring window is opened at that height (not shown).

In the corrosion potential measurement using the local power range monitor, it is not possible to obtain a direct correspondence with the sampled water quality such as oxygen and hydrogen peroxide. However, in the case of the corrosion potential measurement near the pressure vessel bottom mirror 8 as described above, reactor water can be collected using the sampling piping 35a and measured by the water quality measuring device 34a.

By such measurement of the corrosion potential, the amount of hydrogen injected into the feedwater from the off-gas system piping 31, which is a hydrogen injection device, is adjusted so that the corrosion potential in the lower plenum 36 is reduced to a target value. Excess hydrogen injected into the reactor water in the reactor pressure vessel 20 is exhausted to the off-gas system piping 31 via the main steam piping 27, the turbine 22, and the condenser 28. Excess hydrogen exhausted to the off-gas system piping 31 is treated by being combined with oxygen by a recombiner (not shown) provided in the off-gas system piping 31.

The hydrogen concentration of the feedwater is obtained by measuring the feedwater sampled by the sampling piping 35c with the water quality measuring device 34c. The dose rate of the main steam piping 27 during hydrogen injection is monitored by the dose rate monitor 32.

Since a plurality of corrosion potential sensors 4 can be arranged on the local power range monitor outer tube 1 in this method, the corrosion potential sensors 4 are installed at a plurality of locations in the boiling water reactor plant to three-dimensionally map the corrosion environment in which stress corrosion cracking (SCC) occurs in the structural members of the boiling water reactor plant in the lower plenum 36. As a result, it is possible to provide maintenance measures for ensuring long-term safety, soundness, and reliability of the nuclear plant.

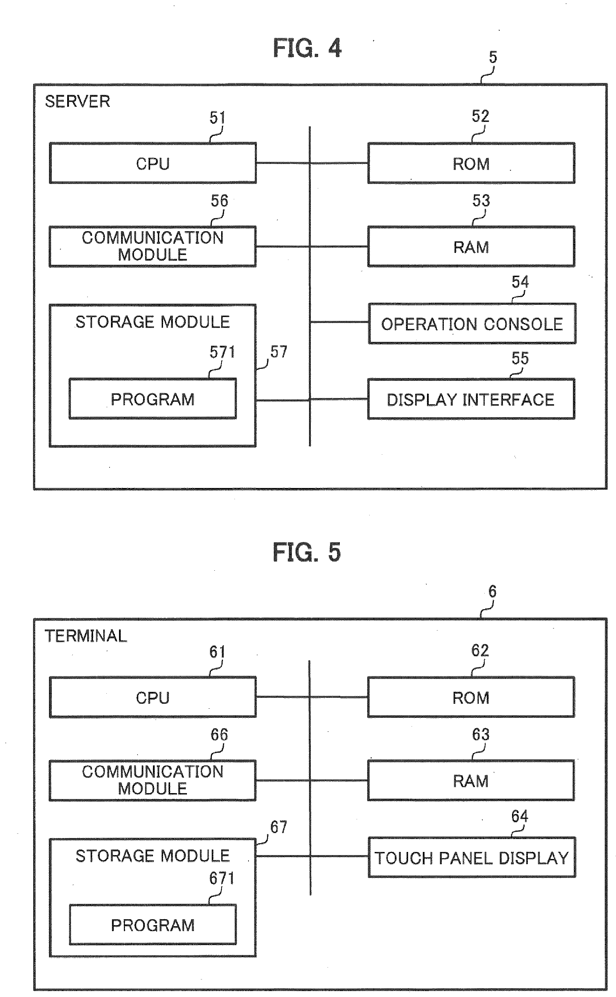

FIG. 4 is a hardware configuration diagram of the server 5.

The server 5 is a computer installed in a data center, for example. The server 5 includes a CPU (Central Processing Unit) 51, a storage module 57, a ROM (Read Only Memory) 52, a RAM (Random Access Memory) 53, an operation console 54, a display interface 55, and a communication module 56.

The CPU 51 is a central processing unit and executes a program 571 stored in the storage module 57. The program 571 is executed by the CPU 51 to execute each process shown in FIG. 1.

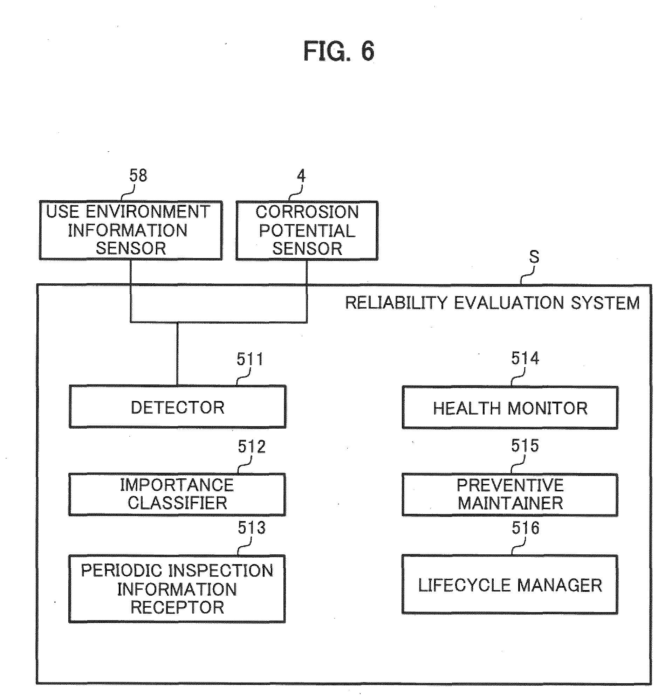

The CPU 61 implements each functional unit shown in FIG. 6 by executing the program 571. Each process executed by the CPU 61 will be described later with reference to FIGS. 1, 7, and 8.

The storage module 57 is a mass storage device, and includes, for example, a hard disk drive (HDD) and a flash memory.

The RAM 53 is a volatile memory and functions as a work area for temporarily storing various programs executable by the CPU 51, input data, output data, parameters, and the like. The ROM 52 is a non-volatile memory, and stores, for example, a BIOS (Basic I/O System).

The operation console 54 includes a keyboard having cursor keys, numeric keys, various function keys, and the like, and a pointing device such as a mouse. The operation console 54 detects a key press signal of a key pressed on the keyboard and an operation signal from the mouse. The CPU 51 executes various processes based on an operation signal from the operation console 54.

The display interface 55 includes, for example, a monitor display such as a Liquid Crystal Display (LCD). The display interface 55 displays various screens according to a display signal input from the CPU 51. Further, the display interface 55 and the operation console 54 may employ a touch panel display.

FIG. 5 is a hardware configuration diagram of the terminal 6.

The terminal 6 is, for example, a tablet terminal owned by each worker. The terminal 6 includes a CPU 61, a storage module 67, a ROM 62, a RAM 63, a touch panel display 64, and a communication module 66.

The CPU 61 is a central processing unit and executes a program 671 stored in the storage module 67. The program 671 is, for example, a browser, and is executed by the CPU 61 to implement input/output processing with the server 5.

The storage module 67 is a mass storage device, and includes, for example, a hard disk drive (HDD) and a flash memory.

The RAM 63 is a volatile memory and functions as a work area for temporarily storing various programs executable by the CPU 61, input data, output data, parameters, and the like. The ROM 62 is a non-volatile memory, and stores, for example, a BIOS.

The touch panel display 64 is formed by superimposing a transparent touch panel on a display such as an LCD. The touch panel display 64 detects a press signal of a pressed position on the touch panel. The CPU 61 executes various processes based on an operation signal from the touch panel display 64. The touch panel display 64 displays various screens according to a display signal input from the CPU 61.

FIG. 6 is a functional block diagram of the reliability evaluation system S for a nuclear power plant.

The reliability evaluation system S includes a detector 511, an importance classifier 512, a periodic inspection information receptor 513, a health monitor 514, a preventive maintainer 515, and a lifecycle manager 516.

The detector 511 detects environmental information of the plant P during operation. The environmental information detected by the detector 511 includes any of a type and concentration of a chemical contained in the reactor water of the reactor pressure vessel during operation, the type of material, and construction data at the time of construction.

The health monitor 514 constantly monitors the health of the equipment constituting the plant P based on the environmental information of the plant P during operation and the importance information of the equipment constituting the plant P. The health monitor 514 may further constantly monitor the health of the equipment constituting the plant P based on periodic inspection information and/or standard information of the plant P, but is not limited thereto.

The preventive maintainer 515 instructs preventive maintenance for each unit of equipment based on the health evaluation results of the equipment constituting the plant P during operation by the health monitor 514.

The lifecycle manager 516 formulates a repair plan for the plant P based on a preventive maintenance instruction for corrosion of the equipment by the preventive maintainer 515 and the health evaluation results of the equipment by the health monitor 514.

The periodic inspection information receptor 513 receives input of periodic inspection information and/or standard information of the plant P. The periodic inspection information receptor 513 is not an essential component.

The importance classifier 512 classifies importance of the equipment constituting the plant P. The importance classifier 512 is not an essential component, and the importance of the equipment may be classified manually.

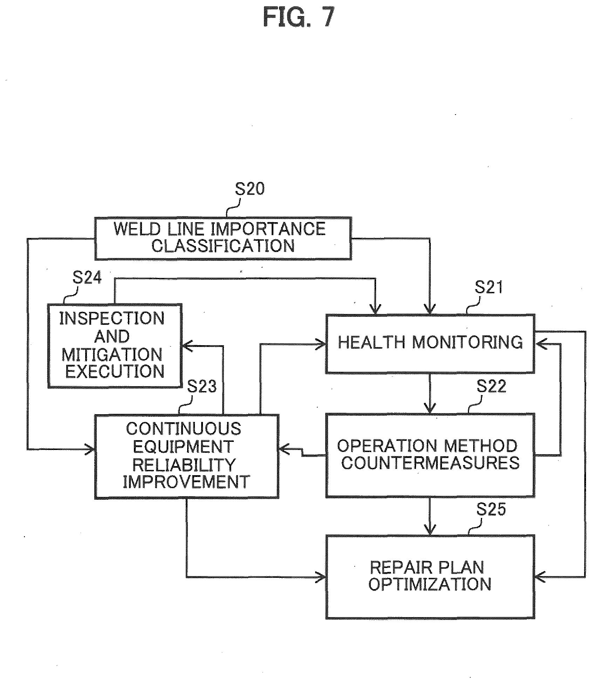

FIG. 7 is a diagram showing reliability and lifecycle management of weld lines of a nuclear power plant.

Types of weld lines include: in-reactor structures such as reactor pressure vessel, shroud, shroud support, jet pump, and grid plate, and equipment related to control rod insertion; and joints of structures such as turbine casing, bearings, condenser, generator and hydrogen supply equipment, old condensate system heat exchangers, and piping.

The reliability evaluation system S classifies weld lines by importance (step S20). The importance of a weld line is determined by factors that affect long-term health evaluation, such as: whether it affects the in-reactor safety system, the soundness of in-reactor fuel, and the release of radioactive materials outside the system; whether it is determined by law; conventional knowledge; welding methods; types of welding; metals used for welding; post-processing such as polishing after welding; influencing factors such as fluids in contact; and the type and concentration of chemicals contained in the reactor water of the reactor pressure vessel during operation.

The reliability evaluation system S monitors the health of the weld lines (step S21). Specifically, weld line health monitoring is the evaluation of the current reliability of a weld line from previous inspection results, plant P operating conditions, maintenance specifications, standards, conventional knowledge such as papers, and the like.

Based on the types of weld lines classified in step S20, the reliability evaluation system S continuously improves equipment reliability (step S23). Specifically, the reliability evaluation system S performs inspection and mitigation (step S24). In the inspection, the reliability evaluation system S selects an inspection frequency and an inspection method that minimize costs while ensuring reliability in consideration of inspection results, maintenance standards, laws, and periodic inspection processes. The reliability evaluation system S then instructs stress mitigation and/or environmental mitigation in the mitigation (step S24). In response to this, the operator performs stress mitigation and/or environmental mitigation on the weld lines.

The reliability evaluation system S takes countermeasures for operation methods based on the results of monitoring the health of the weld lines (step S22). Here, countermeasures for operation methods refer to improvement of operation and operation methods of the plant P, enhancement of sampling, operation change of mitigation technology, and the like.

Based on the health monitoring results, the operation method countermeasure results, and the continuous equipment reliability improvement results, the reliability evaluation system S optimizes the repair plan (step S25). Here, the optimization of the repair plan is lifecycle management, and requires large-scale construction and inspection. Therefore, the reliability evaluation system S performs optimization so as to minimize costs while ensuring the reliability of equipment and facilities in consideration of the long-term periodic inspection process.

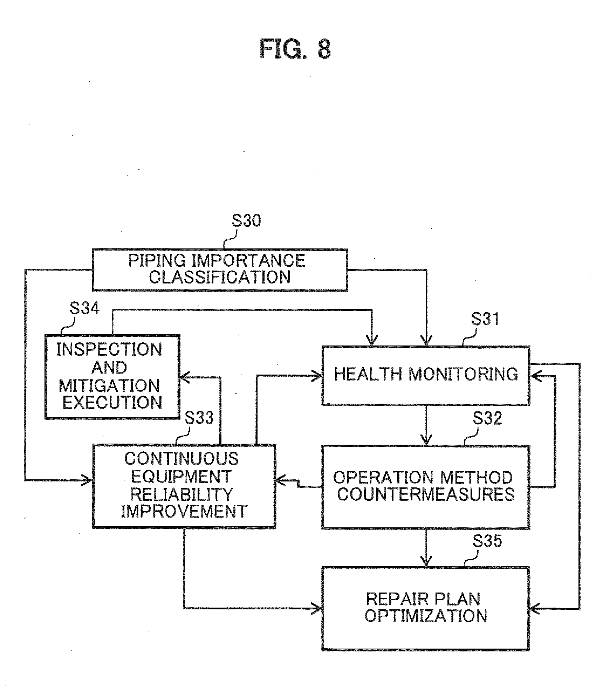

FIG. 8 is a diagram showing reliability and lifecycle management of piping of a nuclear power plant.

Types of piping include the type of fluid flowing through the piping, material, and whether the piping is installed on the reactor side, turbine side, or rad facility. The types of liquids include water, steam, and whether or not they contain chemicals.

The reliability evaluation system S classifies piping by importance (step S30). The importance classification of piping is determined by factors such as whether it affects the in-reactor safety system, the soundness of in-reactor fuel, and the release of radioactive materials outside the system; whether it is determined by laws, internal regulations, or standards; and environmental factors such as the concentration of radioactive materials and the type and concentration of chemicals.

The reliability evaluation system S monitors the health of the piping (step S31). Specifically, piping health monitoring is the evaluation of the current reliability of the piping from previous inspection results, plant operating conditions, maintenance specifications, standards, conventional knowledge such as papers, and the like.

Based on the types of weld lines classified in step S30, the reliability evaluation system S continuously improves equipment reliability (step S33). Specifically, the reliability evaluation system S performs inspection and mitigation (step S34). In the inspection, the reliability evaluation system S selects an inspection frequency and an inspection method that minimize costs while ensuring reliability in consideration of inspection results, maintenance standards, laws, and periodic inspection processes. The reliability evaluation system S then performs stress mitigation and/or environmental mitigation in the mitigation.

The reliability evaluation system S takes countermeasures for operation methods based on the results of monitoring the health of the weld lines (step S32). Here, countermeasures for operation methods refer to improvement of operation and operation methods of the plant P, enhancement of sampling, operation change of mitigation technology, and the like.

Based on the health monitoring results, the operation method countermeasure results, and the continuous equipment reliability improvement results, the reliability evaluation system S optimizes the repair plan (step S35). Here, the optimization of the repair plan is lifecycle management, and requires large-scale construction and inspection. Therefore, the reliability evaluation system S performs optimization so as to minimize costs while ensuring the reliability of the equipment in consideration of the long-term periodic inspection process.

By incorporating corrosion environment, material composition, material degradation data, and inspection results -- which are not included in the equipment reliability defined by the Institute of Nuclear Power Operations (INPO) in the United States and were conventionally performed in in-service inspections -- into equipment reliability, it becomes possible to constantly monitor the degradation status of structures, equipment, and systems, making it easier to constantly monitor the soundness of the plant P and evaluate the plant lifecycle.

### <<Modifications>>

The present invention is not limited to the above-described embodiments, and includes various modifications. For example, the aforementioned embodiments have been described in detail for easy understanding of the present invention, and the present invention is not limited to those having all the configurations described above. A part of the configuration of one embodiment can be replaced with the configuration of another embodiment, and the configuration of one embodiment can be added to the configuration of another embodiment. Further, it is also possible to add, delete, or replace a part of the configuration of each embodiment with another configuration.

Each of the configurations, functions, processing units, processing means, and the like described above may be partially or entirely implemented by hardware such as an integrated circuit. Each of the configurations and functions described above may be implemented by software by having a processor interpret and execute a program that implements each function. Information such as programs, tables, and files that implement each function can be placed in a recording device such as a memory, a hard disk, or an SSD (Solid State Drive), or a recording medium such as a flash memory card or a DVD (Digital Versatile Disk).

In each embodiment, control lines and information lines indicate those considered necessary for explanation, and not all control lines and information lines are necessarily indicated on the product. In actuality, it may be considered that almost all configurations are connected to each other.

## Claims

1. A plant reliability evaluation system comprising:
a detector that detects environmental information of a plant during operation; and
a health monitor that constantly monitors health of equipment constituting the plant based on the environmental information during operation and importance information of the equipment constituting the plant.

2. The plant reliability evaluation system according to claim 1,
wherein the plant is a power plant including a reactor pressure vessel, and
the environmental information detected by the detector includes any of a type and concentration of a chemical contained in reactor water of the reactor pressure vessel during operation, the type of material, and construction data at the time of construction.

3. The plant reliability evaluation system according to claim 1, further comprising:
a preventive maintainer that instructs preventive maintenance for the equipment based on health evaluation results of the equipment during operation by the health monitor.

4. The plant reliability evaluation system according to claim 3, further comprising:
a lifecycle manager that formulates a repair plan for the plant based on a preventive maintenance instruction for corrosion of the equipment by the preventive maintainer and the health evaluation results of the equipment by the health monitor.

5. The plant reliability evaluation system according to claim 2,
wherein the equipment is related to control rod insertion and an in-reactor structure.

6. The plant reliability evaluation system according to claim 2,
wherein the equipment is any of a reactor pressure vessel, a shroud, a shroud support, a jet pump, a grid plate, a fuel support plate, and main piping that connects facilities with safety importance and power generation importance higher than a threshold value.

7. The plant reliability evaluation system according to claim 2,
wherein the equipment includes any of structures, weld lines, and piping.

8. The plant reliability evaluation system according to claim 1, further comprising:
a periodic inspection information receptor that receives input of periodic inspection information and/or standard information of the plant,
wherein the health monitor constantly monitors the health of the equipment constituting the plant based on the environmental information during operation, the importance information of the equipment constituting the plant, and the periodic inspection information and/or standard information of the plant.

9. The plant reliability evaluation system according to claim 1, further comprising:
an importance classifier that classifies importance of the equipment constituting the plant.

10. A plant reliability evaluation method comprising the steps of:
detecting, by a detector, environmental information of a plant during operation; and
constantly monitoring, by a health monitor, health of equipment constituting the plant based on the environmental information during operation and importance information of the equipment constituting the plant.

11. A plant reliability evaluation program that causes a computer to execute procedures of:
detecting environmental information of a plant during operation; and
constantly monitoring health of equipment constituting the plant based on the environmental information during operation and importance information of the equipment constituting the plant.
